(19) Europäisches Patentamt
European Patent Office
Office européen des brevets

(11) **EP 3 599 132 A1**

(12) **EUROPEAN PATENT APPLICATION**

(43) Date of publication:
**29.01.2020 Bulletin 2020/05**

(51) Int Cl.:
***B60Q 1/115*** *(2006.01)*

(21) Application number: **19187347.0**

(22) Date of filing: **19.07.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **24.07.2018 JP 2018138273** | (71) Applicant: **STANLEY ELECTRIC CO., LTD.**<br>**Tokyo 153-8636 (JP)**<br><br>(72) Inventor: **NAKAMURA, Shigekatsu**<br>**Tokyo, 153-8636 (JP)**<br><br>(74) Representative: **Schmidbauer, Andreas Konrad**<br>**Wagner & Geyer Partnerschaft mbB**<br>**Patent- und Rechtsanwälte**<br>**Gewürzmühlstrasse 5**<br>**80538 München (DE)** |

(54) **CONTROL DEVICE FOR VEHICULAR LAMP, CONTROL METHOD FOR VEHICULAR LAMP, VEHICULAR LAMP SYSTEM**

(57) To obtain correction information for automatic leveling control without a special environment. A device controlling the vehicular lamp axis in accordance with attitude change in the pitch direction of a vehicle including: a detection part detecting a first and a second acceleration; a correction part obtaining variation of the vehicle angle at a stop based on the two accelerations of a first and a second timing, obtaining vehicle angle while traveling based on the two accelerations while traveling, and obtaining and retaining a correction angle based on the difference between the two; an angle calculation part obtaining the vehicle angle while traveling based on the two accelerations, and obtaining an actual vehicle angle by subtracting the correction angle from the vehicle angle while traveling; and an optical axis control part generating a control signal based on the actual vehicle angle, and providing the control signal to the vehicular lamp.

**Description**

BACKGROUND OF THE INVENTION

Field of the Invention

The present invention relates to a technique for controlling light irradiation direction by a vehicular lamp (for example, a pair of headlamps) corresponding to an attitude change of a vehicle.

Description of the Background Art

Automatic leveling control for adjusting irradiation direction of light (or the optical axis) of headlamps corresponding to the attitude change of a vehicle in the pitch direction due to loading of occupants and/or cargoes is known. According to such automatic leveling control, it is possible to prevent glaring an oncoming vehicle or a preceding vehicle even when the attitude of the vehicle changes. Prior art for achieving automatic leveling control in a moving vehicle is disclosed in Japanese Patent No. 6005491, for example. In this document, a technique is described in which the attitude of the vehicle is obtained using output values from an acceleration sensor installed in the vehicle, and automatic leveling control is performed.

Here, when performing automatic leveling control using the output values of the acceleration sensor, it is necessary to consider the installation error of the acceleration sensor to the vehicle. Specifically, for example, when using a three-axis acceleration sensor, it is desirable that the direction of the axes accurately matches the longitudinal direction, the vertical direction, etc. of the vehicle, but in reality, deviation due to installation often occurs. Thus, when performing automatic leveling control, it is necessary to obtain a correction value corresponding to the axis deviation in advance, and to correct the vehicle angle obtained from the output of the acceleration sensor using the correction value, for example.

In order to accurately obtain the above-described correction value, it is necessary to park the vehicle in a special environment where the inclination angle of the road surface is 0°. In this regard, it is easy to set up such an environment when shipping out a new car from a factory production line, for example.

However, when replacing the sensor etc. necessary for automatic leveling control at the car dealer's service facility etc. due to failure etc. of the sensor and acquisition of a correction value is required, it is difficult to prepare such a special environment where the inclination angle of the road surface is 0°.

In a specific aspect, it is an object of the present invention to provide a technique capable of obtaining correction information necessary for automatic leveling control without requiring a special environment.

SUMMARY OF THE INVENTION

[1] A control device for a vehicular lamp according to one aspect of the present invention is (a) a control device which variably controls the optical axis of the vehicular lamp in accordance with an attitude change in the pitch direction of a vehicle including: (b) a detection part that detects a first acceleration correlated with the longitudinal direction of the vehicle and a second acceleration correlated with the vertical direction of the vehicle; (c) a correction part which (i) obtains a vehicle angle variation while the vehicle is at a stop based on the first acceleration and the second acceleration of a first timing and a second timing which follows the first timing while the vehicle is at a stop, (ii) obtains a vehicle angle while the vehicle is traveling based on the correlation between the first acceleration and the second acceleration while the vehicle is traveling, and (iii) obtains and retains a correction angle based on the difference between the vehicle angle while the vehicle is traveling and the vehicle angle variation while the vehicle is at a stop; (d) an angle calculation part which (i) obtains the vehicle angle while the vehicle is traveling based on the correlation between the first acceleration and the second acceleration while the vehicle is traveling, and (ii) obtains an actual vehicle angle based on a value obtained by subtracting the correction angle from the vehicle angle while the vehicle is traveling; and (e) an optical axis control part which generates a control signal for controlling the optical axis of the vehicular lamp based on the actual vehicle angle obtained by the angle calculation part, and provides the control signal to the vehicular lamp.

[2] A control method for a vehicular lamp according to one aspect of the present invention is (a) a control method which variably controls optical axis of the vehicular lamp in accordance with an attitude change in the pitch direction of a vehicle including: (b) a first step that detects a first acceleration correlated with the longitudinal direction of the vehicle and a second acceleration correlated with the vertical direction of the vehicle; (c) a second step which (i) obtains a vehicle angle variation while the vehicle is at a stop based on the first acceleration and the second acceleration of a first timing and a second timing which follows the first timing while the vehicle is at a stop, (ii) obtains a vehicle angle while the vehicle is traveling based on the correlation between the first acceleration and the second acceleration while the vehicle is traveling, and (iii) obtains and retains a correction angle based on the difference between the vehicle angle while the vehicle is traveling and the vehicle angle variation while the vehicle is at a stop; (d) a third step which (i) obtains the vehicle angle while the vehicle is traveling based on the correlation between the first acceleration and the second acceleration while the vehicle is traveling, and (ii) obtains an actual vehicle angle based on a value obtained by subtracting the correction angle from the vehicle angle while the vehicle is traveling; and (e) a step which generates a control signal for controlling the optical axis of the vehicular lamp based on the actual vehicle angle obtained by the third step, and provides the control signal to the vehicular lamp.

[3] A vehicular lamp system according to one aspect of the present invention is a vehicular lamp system including the above-described control device and a vehicular lamp controlled by the control device.

According to the above configurations, it is possible to obtain correction information necessary for automatic leveling control without requiring a special environment.

BRIEF DESCRIPTION OF THE DRAWINGS

FIG. 1 is a block diagram showing a configuration of a vehicular lamp system according to one embodiment.
FIG. 2 is a figure schematically showing the state of optical axis control of the lamp unit.
FIGS. 3A and 3B are figures for explaining the installation state of the acceleration sensor.
FIGS. 4A and 4B are enlarged views showing the relationship between each axis of the acceleration sensor and the angle related to the attitude of the vehicle.
FIG. 5 is a diagram for describing the output of the acceleration sensor while the vehicle is traveling.
FIG. 6 is a diagram for describing the vehicle angle while the vehicle is traveling.
FIG.7 is a flowchart for explaining the operation of the vehicular lamp system.

DESCRIPTION OF THE PREFERRED EMBODIMENTS

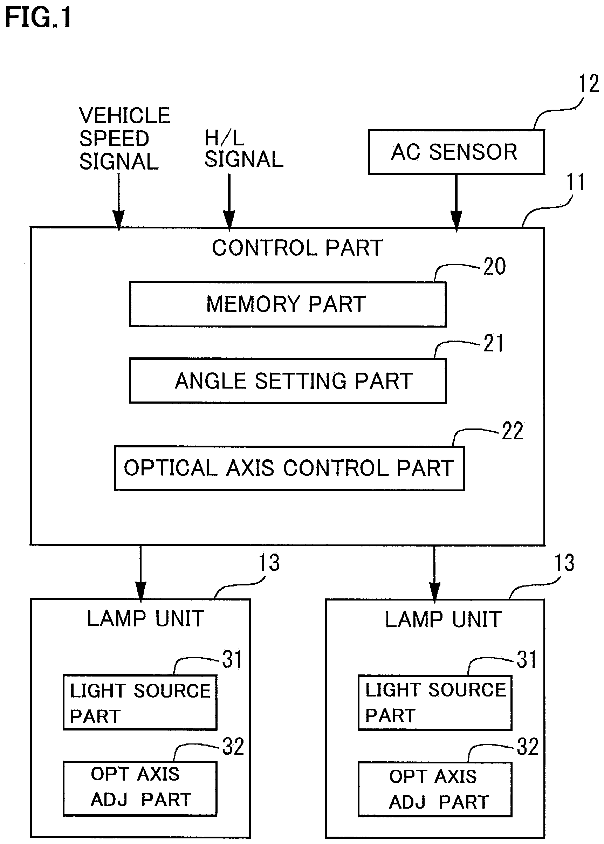

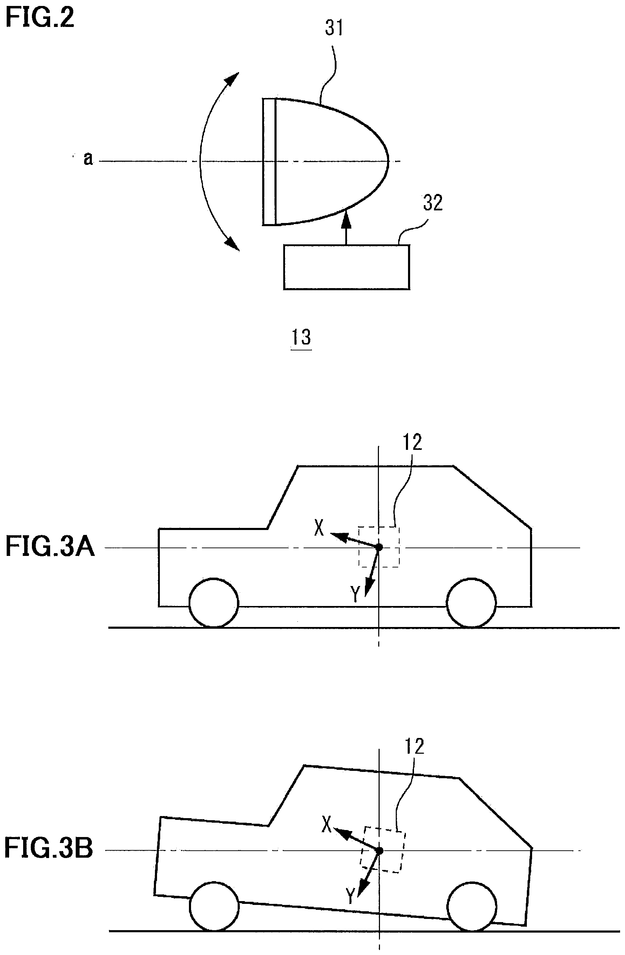

FIG.1 is a block diagram showing a configuration of a vehicular lamp system according to one embodiment. The vehicular lamp system shown in FIG.1 includes a control part 11, an acceleration sensor (a detection part) 12 (abbreviated as AC SENSOR in FIG.1), and a pair of lamp units 13. As schematically shown in FIG.2, the vehicular lamp system variably controls the light irradiation direction (optical axis) a of each lamp unit 13 while the vehicle is traveling in accordance with the attitude change of the vehicle in the pitch direction.

The control part 11 controls the operation of the vehicular lamp system, and carries out a predetermined operation program in a computer system comprising a CPU, ROM, RAM, and the like, for example. As functional blocks, the control part 11 is configured to include a memory part 20, an angle setting part 21, and an optical axis control part 22. Here, in the present embodiment, the memory part 20 and the angle setting part 21 correspond to the "correction part", and the angle setting part 21 corresponds to the "angle calculation part".

The acceleration sensor 12 is a sensor capable of detecting accelerations at least in the direction of two mutually orthogonal axes and is installed at a predetermined position in the vehicle. This acceleration sensor 12 is installed in the vehicle so that the axial direction of one axis corresponds to the longitudinal direction of the vehicle and the axial direction of the other axis corresponds to the vertical direction of the vehicle, for example. Thereby, it is possible to detect the acceleration correlated with the longitudinal direction of the vehicle and the acceleration correlated with the vertical direction of the vehicle.

Each lamp unit 13 is installed at a predetermined position in the front portion of the vehicle, and irradiates light to the front of the vehicle. Each lamp unit 13 is configured to include a light source part 31 having a light source and a reflecting mirror, etc., and an optical axis adjusting part 32 (abbreviated as OPT AXIS ADJ PART in FIG.1) for adjusting the optical axis (main traveling direction) **a** of light emitted from the light source part 31 in the pitch direction of the vehicle (refer to FIG. 2). The optical axis adjusting part 32 has an actuator for vertically adjusting the direction of the light source part 31 of each lamp unit 13, and operates based on a control signal provided from the control part 11, for example.

The memory part 20 stores data necessary for information processing in the control part 11. As the memory part 20, it is desirable to use a memory capable of retaining data even when the vehicle ignition switch is off. Therefore, in the present embodiment, a non-volatile memory is used in the memory part 20.

The angle setting part 21 sets a vehicle angle which indicates the attitude in the pitch direction of the vehicle based on the acceleration obtained from the acceleration sensor 12. In the present embodiment, the angle setting part 21 also performs the setting of the correction information (initial setting) for correcting the installation error due to the acceleration sensor 12 installation to the vehicle body.

The optical axis control part 22 generates a control signal for controlling the optical axis **a** of each lamp unit 13 based on the vehicle angle set by the angle setting part 21, and provides the control signal to each lamp unit 13.

FIGS. 3A and 3B are figures for explaining the installation state of the acceleration sensor. FIG. 3A shows the installation state of the acceleration sensor 12 prior to an attitude change of the vehicle due to loading of occupants and/or cargoes. As illustrated in the figure, the X axis of the acceleration sensor 12 which is the first axis corresponds to the longitudinal direction of the vehicle, and the Y axis of the acceleration sensor 12 which is the second axis corresponds to the vertical direction of the vehicle, and there is a deviation (installation error) in each axis. This deviation occurred at the time when the acceleration sensor 12 was installed (for replacement purpose etc.) into the vehicle body. FIG. 3B shows a state in which the attitude of the vehicle is changed such that the rear part of the vehicle is relatively lowered and the front part of the vehicle is relatively raised due to the influence of loading occupants and/or cargoes onto the vehicle. Here, in either state, it is assumed that the vehicle is at a stop.

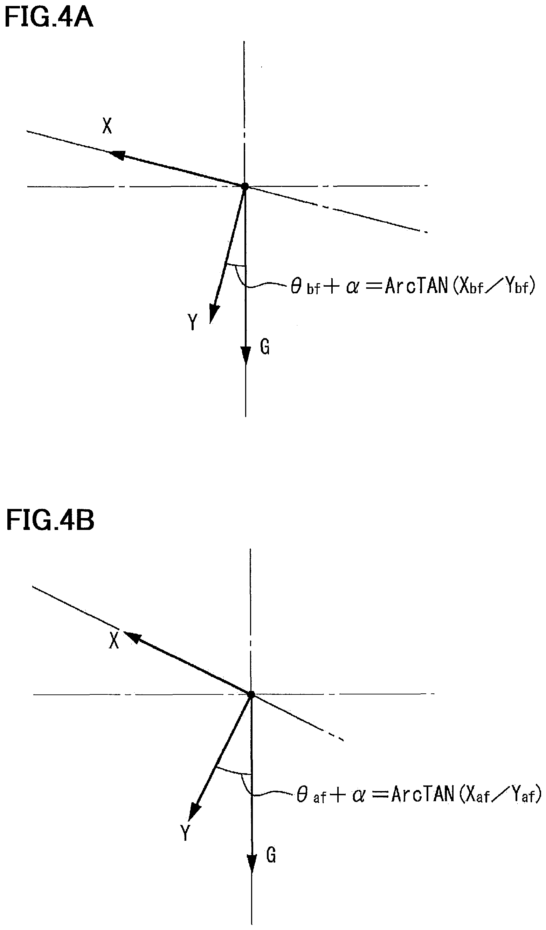

FIGS. 4A and 4B are enlarged views showing the relationship between each axis of the acceleration sensor and the angle related to the attitude of the vehicle. FIG. 4A corresponds to a case where the vehicle is parked on a horizontal road surface (also refer to FIG. 3A). FIG. 4B corresponds to a case where the vehicle is tilted backwardly due to loading of occupants and/or cargoes, or the like (also refer to FIG. 3B). As described above, FIG. 3A show the state prior to the attitude change of the vehicle, and FIG. 3B shows the state after the occurance of attitude change of the vehicle.

Output values of each of the X axis and Y axis of the acceleration sensor before the attitude change of the vehicle are defined as $X_{bf}$ and $Y_{bf}$, respectively. Here, when the vehicle angle is defined as $\theta_{bf}$ and the deviation angle at the time of installation of the acceleration sensor is defined as $\alpha$, the relationship between the sum of $\theta_{bf}$ and $\alpha$, and the output values of the acceleration sensor can be expressed as follows.

$$\theta_{bf} + \alpha = \arctan (X_{bf} / Y_{bf}) \quad ... (1)$$

Similarly. output values of each of the X axis and Y axis of the acceleration sensor after the attitude change of the vehicle are defined as $X_{af}$ and $Y_{af}$, respectively. Here, when the actual vehicle angle is defined as $\theta_{af}$ and the deviation angle at the time of installation of the acceleration sensor is defined as $\alpha$, the relationship between the sum of $\theta_{af}$ and $\alpha$, and the output values of the acceleration sensor can be expressed as follows.

$$\theta_{af} + \alpha = \arctan (X_{af} / Y_{af}) \quad ... (2)$$

From the above equations (1) and (2), the following relational expression is derived.

$$\theta_{af} = \theta_{bf} + \{\arctan (X_{af} / Y_{af}) - \arctan (X_{bf} / Y_{bf})\} ... (3)$$

The term $\{\arctan (X_{af} / Y_{af}) - \arctan (X_{bf} / Y_{bf})\}$ in the above relational expression (3) corresponds to the variation of the vehicle angle before and after the attitude change of the vehicle. Since the above relational expression does not include the deviation angle $\alpha$ at the time of installation of the acceleration sensor, the vehicle angle $\theta_{af}$ after the attitude change can be obtained even when the deviation angle $\alpha$ is unknown. And since the road surface inclination angle does not change while the vehicle is at a stop, by adding the above variation to the vehicle angle $\theta_{bf}$ before the attitude change of the vehicle, the vehicle angle $\theta_{af}$ after the attitude change can be obtained.

The acquired vehicle angle $\theta_{af}$ as described above is written and retained (stored) in the memory part 20 of the control part 11 every time it is acquired. Then, while the vehicle is at a stop, leveling control of the optical axis **a** is performed using the vehicle angle $\theta_{af}$. To be precise, since the variation obtained by the term $\{\arctan (X_{af} / Y_{af}) - \arctan (X_{bf} / Y_{bf})\}$ in the above relational expression (3) is the difference between before and after the attitude change, leveling control of the optical axis **a** is performed based on this difference. For example, if the initial value of the optical axis of the lamp unit 13 is set to 0°, then based on this 0°, leveling control is performed so as to move the optical axis by an angle corresponding to the above variation.

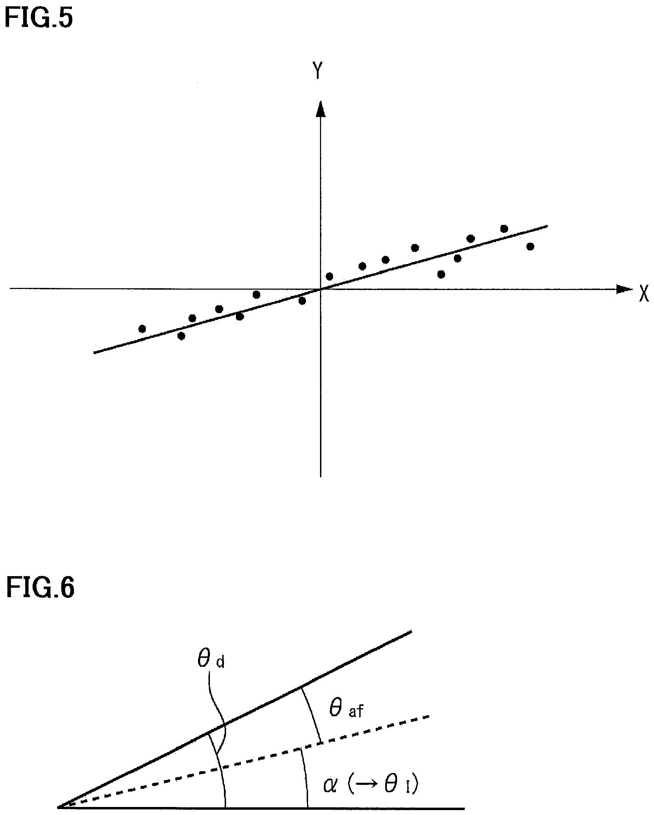

FIG. 5 is a diagram for describing the output of the acceleration sensor while the vehicle is traveling. While the vehicle is traveling, the output values X and Y of each of the X axis and Y axis of the acceleration sensor are acquired at a predetermined cycle (for example, every 100 ms) and stored into the memory part 20. When a certain number of data is obtained (accumulated), as shown in the figure, plotting is conducted based on each output value and linear approximation is performed on the output values to obtain an approximation line. Then, the slope of this approximate straight line (the angle formed by the X axis and the approximate line) becomes the vehicle angle while the vehicle is traveling. However, in the vehicle angle obtained here, the deviation angle $\alpha$ of the acceleration sensor 12 is included.

Hereinafter, this vehicle angle will be referred to as the vehicle angle $\theta_d$ based on the acceleration while the vehicle is traveling.

FIG. 6 is a diagram for describing the vehicle angle while the vehicle is traveling. As described above, the deviation angle $\alpha$ of the acceleration sensor 12 is included in the vehicle angle $\theta_d$ based on the acceleration while the vehicle is traveling. Here, when using the vehicle angle $\theta_{af}$ while at a stop which was obtained before traveling, as shown in the figure, the difference obtained by subtracting the vehicle angle $\theta_{af}$ while at stop from the vehicle angle $\theta_d$ based on the acceleration while the vehicle is traveling corresponds to the deviation angle $\alpha$ of the acceleration sensor 12. Therefore, by retaining into the memory part 20 this deviation angle $\alpha$ which is calculated as a difference and treating this as the vehicle reference angle $\theta_l$ which is a correction angle (correction information) used for the subsequent correction, and further, by using this vehicle reference angle $\theta_l$, the actual vehicle angle $\theta$ (= $\theta_d$ - $\theta_l$) can be calculated. Thereby, leveling control of the optical axis **a** based on the vehicle angle $\theta$ can be achieved.

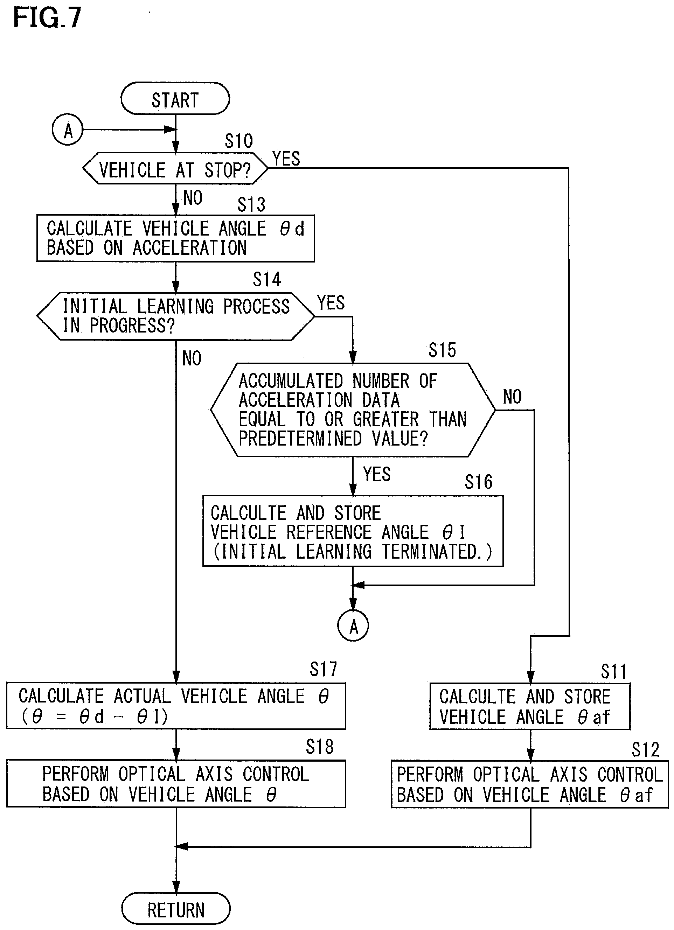

FIG.7 is a flowchart for explaining the operation of the vehicular lamp system. Here, processing contents of the control part 11 is mainly shown. Further, the sequence of each processing block shown here may be changed as long as no inconsistency occurs among them. Further, the flowchart refers to a specific example where the statistical processing to be described later is performed to calculate the angle.

In the vehicular lamp system of the present embodiment, when a predetermined command etc. to instruct the control unit 11 to perform initial learning is given by the car dealer service personnel, initial learning process starts. It is desirable that this initial learning process starts as soon as possible after replacing the acceleration sensor 12, or after replacing the leveling control unit including the control part 11 and the acceleration sensor 12. For example, it is desirable to start the initial learning process immediately after the replacement.

The angle setting part 21 determines whether or not the vehicle is at a stop (STEP S10). The determination as to whether or not the vehicle is at a stop can be made, for example, based on the vehicle speed signal. For example, when the vehicle speed is 0 (zero) or below a certain vehicle speed close to zero, the angle setting part 21 determines that the vehicle is at a stop, and when the vehicle speed is greater than the certain vehicle speed, the angle setting part 21 determines that the vehicle is traveling. Here, the determination may also be made based on the output values of the acceleration sensor 12.

When the vehicle is at a stop (STEP S10; YES), the angle setting part 21 calculates the vehicle angle $\theta_{af}$ while the vehicle is at a stop (STEP S11). The calculation method is as described above, and the angle setting part 21 acquires the output values of the acceleration sensor immediately after stopping where these values are regarded as the output values $X_{bf}$, $Y_{bf}$ before the attitude change of the vehicle, and stores them in the memory part 20, for example. The timing of this "immediately after stopping" can be suitably set, and can be set several seconds after the vehicle is determined to be at a stop in STEP S11, for example. Thereafter, if there is a change in the attitude of the vehicle, then the angle setting part 21 obtains the output values $X_{af}$ and $Y_{af}$ of the acceleration sensor 12 at that time and stores them in the memory part 20. With regard to the determination of presence or absence of the attitude change, when changes in the output values of the acceleration sensor 12 is greater than certain values, it can be determined that there is an attitude change. Here, if there is no attitude change, then the output values $X_{af}$ and $Y_{af}$ of the acceleration sensor 12 at an appropriate timing are obtained and used as output values after the attitude change. The calculated vehicle angle $\theta_{af}$ is written and stored into the memory part 20.

Next, the angle setting part 21 provides the optical axis control part 22 the vehicle angle $\theta_{af}$ (or the variation) obtained in accordance with the attitude change while the vehicle is at a stop. The optical axis control part 22 performs optical axis control based on the vehicle angle $\theta_{af}$ (or the variation) (STEP S12). Specifically, a control signal for controlling the optical axis **a** of each lamp unit 13 is generated by the optical axis control part 22 and the control signal is outputted to each lamp unit 13 and the optical axis **a** is adjusted according to the control signal. Thereafter, the process returns to the above-described STEP S10, and the subsequent processes are performed.

When the vehicle is traveling (STEP S10; NO), the angle setting part 21 obtains the output values of the acceleration sensor while the vehicle is traveling, and calculates the vehicle angle $\theta_d$ based thereon (STEP S13). The method of calculating the vehicle angle $\theta_d$ is as described with reference to FIG. 5. Here, the acquired output values of the acceleration sensor are written and stored into the memory part 20 by the angle setting part 21 every time they are acquired.

Next, the angle setting part 21 determines whether or not an initial learning process is currently in progress (STEP S14). When the initial learning process is in progress (STEP S14; YES), the angle setting part 21 determines whether or not the stored number of output value data accumulated by the acceleration sensor 12 stored in the memory part 20 is equal to or greater than a predetermined value (STEP S15). Here, with regard to the "predetermined value" used for the determination, a value that ensures the calculation accuracy of the vehicle angle $\theta_d$ is acquired by experiment etc. and is set.

If the number of stored data is equal to or greater than a predetermined value (STEP S15; YES), then the angle setting part 21 calculates the vehicle reference angle $\theta_l$ and writes and stores it in the memory part 20 (STEP S16). The method of calculating the vehicle reference angle $\theta_l$ is as described with reference to FIG. 6. After the calculation of the

vehicle reference angle $\theta_I$, the angle setting part 21 terminates the initial learning process. Thereafter, the process returns to STEP S10, and the subsequent processes are performed.

Here, if the number of stored data is less than the predetermined value (STEP S15; NO), then the vehicle reference angle $\theta_I$ is not calculated and the process returns to STEP S10, then the subsequent processes are performed. That is, while the number of accumulated data is less than the predetermined value, the accumulation of output values of the acceleration sensor 12 while the vehicle is traveling continues.

As can be understood from the processes of STEP S13 to STEP S16, in the vehicular lamp system of the present embodiment, leveling control using the vehicle angle $\theta_d$ based on acceleration is not executed during the initial learning process, and the state of the optical axis is retained based on the vehicle angle $\theta_{af}$ set when the vehicle is at a stop.

When the initial learning process is completed (STEP S14; NO), the angle setting part 21 calculates the actual vehicle angle $\theta$ (STEP S17). The actual vehicle angle $\theta$ is obtained as a difference between the vehicle angle $\theta_d$ obtained based on the acceleration and the vehicle reference angle $\theta_I$ ($\theta = \theta_d - \theta_I$).

The angle setting part 21 provides the calculated actual vehicle angle $\theta$ to the optical axis control part 22. The optical axis control part 22 performs optical axis control based on the actual vehicle angle $\theta$ (STEP S18). Specifically, a control signal for controlling the optical axis **a** of each lamp unit 13 is generated by the optical axis control part 22 and outputted to each lamp unit 13, and the optical axis **a** of each lamp unit 13 is adjusted according to the control signal. Thereafter, the process returns to the above-described STEP S10, and the subsequent processes are performed.

According to the above-described embodiment, it is possible to obtain correction information necessary for automatic leveling control without requiring a special environment such as a road surface inclination angle of 0°.

It should be noted that this invention is not limited to the subject matter of the foregoing embodiment, and can be implemented by being variously modified within the scope of the present invention as defined by the appended claims. For example, in the above-described embodiment, although the direction of the light source of the lamp unit was adjusted by an actuator, the optical axis adjustment method is not limited thereto. For example, if the light source of the lamp unit has a configuration in which a plurality of light emitting elements are arranged in a matrix, then automatic leveling can also be realized by switching up and down the row of the light emitting elements to be lit according to the attitude angle.

**Claims**

1. A control device which variably controls optical axis of the vehicular lamp in accordance with an attitude change in the pitch direction of a vehicle comprising:

   a detection part that detects a first acceleration correlated with the longitudinal direction of the vehicle and a second acceleration correlated with the vertical direction of the vehicle;
   a correction part which (i) obtains a vehicle angle variation while the vehicle is at a stop based on the first acceleration and the second acceleration of a first timing and a second timing which follows the first timing while the vehicle is at a stop, (ii) obtains a vehicle angle while the vehicle is traveling based on the correlation between the first acceleration and the second acceleration while the vehicle is traveling, and (iii) obtains and retains a correction angle based on the difference between the vehicle angle while the vehicle is traveling and the vehicle angle variation while the vehicle is at a stop;
   an angle calculation part which (i) obtains the vehicle angle while the vehicle is traveling based on the correlation between the first acceleration and the second acceleration while the vehicle is traveling, and (ii) obtains an actual vehicle angle based on a value obtained by subtracting the correction angle from the vehicle angle while the vehicle is traveling; and
   an optical axis control part which generates a control signal for controlling the optical axis of the vehicular lamp based on the actual vehicle angle obtained by the angle calculation part, and provides the control signal to the vehicular lamp.

2. The control device for a vehicular lamp according to claim 1,
   wherein the first timing and the second timing while the vehicle is at a stop correspond to the timing before and after the attitude change of the vehicle, respectively.

3. The control device for a vehicular lamp according to claim 1 or claim 2,
   wherein the angle calculation part obtains the vehicle attitude angle while the vehicle is traveling using the accumulated first acceleration and the second acceleration when the accumulated number of the first acceleration and the second acceleration while the vehicle is traveling is equal to or greater than a predetermined value.

4. The control device for a vehicular lamp according to any one of claims 1 to 3,

wherein the correlation between the first acceleration and the second acceleration is the slope of the approximate straight line obtained from the first acceleration and the second acceleration.

5. The control device for a vehicular lamp according to any one of claims 1 to 4,
wherein optical axis control based on the actual actual vehicle attitude angle is not executed until the correction angle is determined by the correction part.

6. A control method which variably controls optical axis of the vehicular lamp in accordance with an attitude change in the pitch direction of a vehicle comprising:

a first step that detects a first acceleration correlated with the longitudinal direction of the vehicle and a second acceleration correlated with the vertical direction of the vehicle;
a second step which (i) obtains a vehicle angle variation while the vehicle is at a stop based on the first acceleration and the second acceleration of a first timing and a second timing which follows the first timing while the vehicle is at a stop, (ii) obtains a vehicle angle while the vehicle is traveling based on the correlation between the first acceleration and the second acceleration while the vehicle is traveling, and (iii) obtains and retains a correction angle based on the difference between the vehicle angle while the vehicle is traveling and the vehicle angle variation while the vehicle is at a stop;
a third step which (i) obtains the vehicle angle while the vehicle is traveling based on the correlation between the first acceleration and the second acceleration while the vehicle is traveling, and (ii) obtains an actual vehicle angle based on a value obtained by subtracting the correction angle from the vehicle angle while the vehicle is traveling; and
a step which generates a control signal for controlling the optical axis of the vehicular lamp based on the actual vehicle angle obtained by the third step, and provides the control signal to the vehicular lamp.

7. A vehicular lamp system comprising the control device according to any one of claims 1 to 5 and a vehicular lamp controlled by the control device.

# FIG.1

VEHICLE
SPEED
SIGNAL

H/L
SIGNAL

AC SENSOR — 12

— 11

CONTROL PART

MEMORY PART — 20

ANGLE SETTING PART — 21

OPTICAL AXIS CONTROL PART — 22

LAMP UNIT — 13

LIGHT SOURCE
PART — 31

OPT AXIS
ADJ PART — 32

LAMP UNIT — 13

LIGHT SOURCE
PART — 31

OPT AXIS
ADJ PART — 32

8

FIG.2

31

a

32

13

FIG.3A

12

X

Y

FIG.3B

12

X

Y

## FIG.4A

$\theta_{bf} + \alpha = \text{ArcTAN}(X_{bf}/Y_{bf})$

## FIG.4B

$\theta_{af} + \alpha = \text{ArcTAN}(X_{af}/Y_{af})$

## FIG.5

## FIG.6

# FIG.7

```
                    ┌──────────┐
                    │  START   │
                    └──────────┘
         ┌──┐            │
         │A │───────────▶│
         └──┘            │          S10
                    ╱─────────────────╲  YES
                   ⟨ VEHICLE AT STOP? ⟩──────────────────────┐
                    ╲─────────────────╱                      │
                         │ NO    S13                         │
                 ┌───────────────────────────┐               │
                 │ CALCULATE VEHICLE ANGLE θd │               │
                 │ BASED ON ACCELERATION      │               │
                 └───────────────────────────┘               │
                         │              S14                   │
                   ╱────────────────────────╲  YES            │
                  ⟨ INITIAL LEARNING PROCESS ⟩───────┐        │
                  ⟨ IN PROGRESS?             ⟩        │        │
                   ╲────────────────────────╱         │        │
                         │ NO                         ▼   S15  │
                         │              ╱──────────────────────╲  NO
                         │             ⟨ ACCUMULATED NUMBER OF  ⟩────┐
                         │             ⟨ ACCELERATION DATA      ⟩    │
                         │             ⟨ EQUAL TO OR GREATER THAN⟩   │
                         │             ⟨ PREDETERMINED VALUE?    ⟩   │
                         │              ╲──────────────────────╱    │
                         │                    │ YES        S16       │
                         │             ┌──────────────────────────┐ │
                         │             │ CALCULTE AND STORE        │ │
                         │             │ VEHICLE REFERENCE ANGLE θI│ │
                         │             │ (INITIAL LEARNING         │ │
                         │             │  TERMINATED.)             │ │
                         │             └──────────────────────────┘ │
                         │                    │◀──────────────────────┘
                         │                  ┌──┐
                         │                  │A │
                         │                  └──┘
              S17        │                                    S11
  ┌──────────────────────────────┐          ┌──────────────────────────┐
  │ CALCULATE ACTUAL VEHICLE      │          │ CALCULTE AND STORE        │
  │ ANGLE θ (θ = θd - θI)         │          │ VEHICLE ANGLE θaf         │
  └──────────────────────────────┘          └──────────────────────────┘
              │ S18                                     │ S12
  ┌──────────────────────────────┐          ┌──────────────────────────┐
  │ PERFORM OPTICAL AXIS CONTROL  │          │ PERFORM OPTICAL AXIS      │
  │ BASED ON VEHICLE ANGLE θ      │          │ CONTROL BASED ON VEHICLE  │
  │                               │          │ ANGLE θaf                 │
  └──────────────────────────────┘          └──────────────────────────┘
              │◀──────────────────────────────────────┘
       ┌──────────┐
       │  RETURN  │
       └──────────┘
```

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 738 041 A2 (KOITO MFG CO LTD [JP]) 4 June 2014 (2014-06-04) * the whole document * | 1-7 | INV. B60Q1/115 |
| A | US 2017/297477 A1 (KASABA YUSUKE [JP] ET AL) 19 October 2017 (2017-10-19) * figures 1-20 * | 1-7 | |
| A | DE 10 2012 021640 A1 (VALEO SCHALTER & SENSOREN GMBH [DE]) 13 March 2014 (2014-03-13) * paragraphs [0018] - [0042]; figures 1-9 * | 1-7 | |

TECHNICAL FIELDS
SEARCHED (IPC)

B60Q

The present search report has been drawn up for all claims

| Place of search | Date of completion of the search | Examiner |
|---|---|---|
| Munich | 27 November 2019 | Sarantopoulos, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 18 7347

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2019

| Patent document cited in search report | | Publication date | Patent family member(s) | | Publication date |
|---|---|---|---|---|---|
| EP 2738041 | A2 | 04-06-2014 | CN 103847617 A | | 11-06-2014 |
| | | | EP 2738041 A2 | | 04-06-2014 |
| | | | JP 6005491 B2 | | 12-10-2016 |
| | | | JP 2014108639 A | | 12-06-2014 |
| | | | US 2014156150 A1 | | 05-06-2014 |
| US 2017297477 | A1 | 19-10-2017 | CN 107206928 A | | 26-09-2017 |
| | | | EP 3246205 A1 | | 22-11-2017 |
| | | | JP WO2016114159 A1 | | 19-10-2017 |
| | | | US 2017297477 A1 | | 19-10-2017 |
| | | | WO 2016114159 A1 | | 21-07-2016 |
| DE 102012021640 A1 | | 13-03-2014 | DE 102012021640 A1 | | 13-03-2014 |
| | | | EP 2708417 A2 | | 19-03-2014 |

EPO FORM P0459

For more details about this annex : see Official Journal of the European Patent Office, No. 12/82

**REFERENCES CITED IN THE DESCRIPTION**

**Patent documents cited in the description**

- JP 6005491 B